# EUROPÄISCHE PATENTSCHRIFT

(11) **EP 3 793 882 B1**
(45) Veröffentlichungstag und Bekanntmachung des Hinweises auf die Patenterteilung: **11.05.2022**
(21) Anmeldenummer: 19734305.6
(22) Anmeldetag: 18.06.2019
(51) Int. Cl.: B61L 15/00

(54) **ALARMIERUNGSVORRICHTUNG FÜR EIN SCHIENENFAHRZEUG, SCHIENENFAHRZEUG UND SYSTEM**
WARNING DEVICE FOR A RAIL VEHICLE, RAIL VEHICLE AND SYSTEM
DISPOSITIF D'ALARME POUR VÉHICULE FERROVIAIRE, VÉHICULE FERROVIAIRE ET SYSTÈME

(30) Priorität: 26.06.2018 DE 102018210408
(43) Veröffentlichungstag der Anmeldung: 24.03.2021
(73) Patentinhaber: Siemens Mobility GmbH, 81739 München (DE)
(72) Erfinder: LOHNEIS, Georg, 96250 Ebensfeld (DE); STROESSNER, Christian, 91091 Großenseebach (DE)
(86) Internationale Anmeldenummer: PCT/EP2019/066019
(87) Internationale Veröffentlichungsnummer: WO 2020/002045

(56) Entgegenhaltungen:
- DE-T5-112015 005 994
- US-A1- 2012 242 484
- US-A1- 2014 049 408
- WERNER GEIER: "Das neue Mensch-Maschine Interface der Lokomotive BR 185", EISENBAHN-REVUE INTERNATIONAL,, Bd. 1999, Nr. 9, 1. Januar 1999 (1999-01-01), Seiten 366-374, XP009091943, ISSN: 1421-2811

## Beschreibung

In Schienenfahrzeugen, wie beispielsweise Eisenbahnen, Straßenbahnen etc., werden Diagnoseinformationen, die einen Istzustand des Schienenfahrzeugs ausgeben bzw. anzeigen, in der Regel auf elektronischen Anzeigegeräten dargestellt. Der Istzustand kann dabei, je nach Zustand des Schienenfahrzeugs, einen Normalzustand beschreiben, bei dem das Schienenfahrzeug keine Funktionseinschränkungen aufweist und kein weiterer Handlungsbedarf für einen Fahrzeugführer besteht. Der Istzustand kann aber unter Umständen auch einen entsprechenden Fehlerzustand, wie beispielsweise das Überschreiten von Temperaturgrenzen, des Schienenfahrzeugs beschreiben. Um diesen Fehlerzustand zu beheben, kann dann ein entsprechender Handlungsbedarf auf Seiten des Fahrzeugführers von Nöten sein. Beispielsweise kann es beim Defekt von Antriebsmotoren notwendig sein diese zu deaktivieren, um das Fahrzeug weiter betreiben zu können. Die Anzeigegeräte, auf denen die Diagnoseinformationen angezeigt werden, befinden sich in der Regel in einem Führerstand des Schienenfahrzeugs, so dass die Diagnoseinformationen von einem Fahrzeugführer eingesehen werden können. Die Diagnoseinformationen werden üblicherweise als Text auf dem Anzeigegerät dargestellt. Die Erfassung des Textes durch den Fahrzeugführer kann je nach Textlänge einige Zeit in Anspruch nehmen. In dieser Zeit kann sich der Fahrzeugführer eventuell nicht vollständig auf den Verkehr konzentrieren. Zudem benötigt der Fahrzeugführer ein tieferes Fahrzeugverständnis, um mittels der im Textformat angezeigten Diagnoseinformation zu erkennen, welche betriebliche Einschränkung vorliegt und ob ein Handlungsbedarf bzw. welcher Handlungsbedarf notwendig ist. In der Praxis führt dies oft zu Unsicherheiten beim Fahrzeugführer. Diese Unsicherheiten können wiederum zu übervorsichtigen Handlungen des Fahrzeugführers führen, welche beispielsweise den Betriebsablauf stören (Zug wird gestoppt, obwohl nur einfache Bedienhandlungen notwendig sind, um das Fahrzeug wieder zu konfigurieren, bspw. eine Nullstellungsquittung des Fahrhebels, d. h. eine Neutralstellung des Fahrhebels.) und evtl. entsprechend hohe Folgekosten mit sich ziehen. Solch hohe Folgekosten können beispielsweise bei einer unnötigen Unterbringung des Schienenfahrzeugs in Wartungsdepots entstehen, wobei bei der Überprüfung der Schienenfahrzeuge festgestellt wird, dass kein Schaden vorliegt.

Um diese Probleme zu lösen, wurde bislang versucht die Diagnoseinformationen des Schienenfahrzeugs je nach Schwere der vorliegenden Störungen in Kategorien zu unterteilen. Dabei erfolgt die Kategorisierung oftmals in Form von Buchstaben "A", "B", "C", usw., welche einem Fahrzeugführer angezeigt werden können und einen bestimmten Schweregrad einer vorliegenden Störung beschreiben sollen. Trotz umfassender Schulungen kann es dennoch oftmals schwierig sein die einzelnen Schweregradkategorien auszuwerten. Auch sagt eine Kategorisierung der Diagnoseinformationen bzw. Störungen nicht zwangsläufig darüber etwas aus, ob ein Handlungsbedarf und wenn ja welcher Handlungsbedarf für einen Fahrzeugführer besteht.

Werden, wie oben beschrieben, Buchstaben zur Kategorisierung des Schweregrads verwendet, kann dies zusätzlich zu Unsicherheiten und Verwirrungen auf Seiten des Fahrzeugführers führen, da die Zuordnung zwischen Buchstaben und einem Schweregrad nicht eindeutig und selbsterklärend ist.

Aus der Druckschrift US 2014/0049408 A1 ist ein Informationsverteilungssystem und ein Verfahren zur Informationsverteilung bekannt.

Aus der Druckschrift "Das neue Mensch-Maschine-Interface der Lokomotive BR 185", von Werner Geier, EISENBAHN-REVUE INTERNATIONAL, Bd. 1999, Nr. 9, 1. Januar 1999 (1999-01-01), Seiten 366-374, XP009091943, ISSN: 1421-2811, sind Führertische sowie zugehörige Anzeigeelemente bekannt.

Es ist eine Aufgabe der vorliegenden Erfindung Diagnoseinformationen bzw. einen Istzustand eines Schienenfahrzeugs so ausgeben, dass diese auf die physischen Gegebenheiten der Wahrnehmung und Aufnahmefähigkeit eines Fahrzeugführers Rücksicht nehmen.

Diese Aufgabe wird durch eine Alarmierungsvorrichtung gemäß Patentanspruch 1, durch ein Schienenfahrzeug gemäß Patentanspruch 8 und durch ein Alarmierungssystem gemäß Patentanspruch 9 gelöst.

Die erfindungsgemäße Alarmierungsvorrichtung für ein Schienenfahrzeug umfasst die Merkmale des Anspruches

Eine Komponente der Alarmierungsvorrichtung ist eine Fehlerdetektionseinrichtung, die ausgebildet ist, um zumindest einen Fehlerzustand des Schienenfahrzeugs zu erfassen. Die Fehlerdetektionseinrichtung kann dabei auch nur eine Schnittstelle sein, wie später noch näher erläutert wird, welche einen detektierten Fehlerzustand erfasst bzw. übergibt. Dabei kann beispielsweise ein Fehlerzustand des gesamten Schienenfahrzeugs erfasst werden. Es können aber auch mehrere Fehlerzustände zu verschiedenen Komponenten des Schienenfahrzeugs erfasst werden. Fehlerzustände können z. B. einen Antriebsausfall, ein Überschreiten von Temperaturschwellwerten, eine fehlerhafte Eingabe von Betriebsdaten oder dergleichen beschreiben.

Eine weitere Komponente einer erfindungsgemäßen Alarmierungsvorrichtung ist ein Bildspeicher, der eine Anzahl von Bildern beinhaltet. Die Bilder geben dabei einen Istzustand eines Schienenfahrzeugs bzw. dessen Komponenten an. Der Istzustand kann, wie bereits erläutert, einen Normalzustand oder einen Fehlerzustand des Schienenfahrzeugs beschreiben.

Die Bilder sind bevorzugt so ausgestaltet, dass sie selbsterklärend sind und einem Fahrzeugführer intuitiv einen entsprechenden Handlungsbedarf aufzeigen. Dazu werden die Bilder bevorzugt in einer Weise dargestellt, dass sie auf die physischen Gegebenheiten der menschlichen Wahrnehmung und Aufnahme von Informationen Rücksicht nehmen und dabei darauf gerichtet sind, die Wahrnehmung der gezeigten Informationen durch den Fahrzeugführer in bestimmter Weise zu verbessern und zweckmäßig zu gestalten. Die Bilder enthalten also insbesondere keinen ausgeschriebenen Text. Sie können jedoch eventuell einzelne Buchstaben mit einem allgemein verständlichen Informationsgehalt beinhalten.

Zudem umfasst die Alarmierungsvorrichtung eine erste Auswahleinheit zur Auswahl zumindest eines der Bilder aus dem Bildspeicher in Abhängigkeit von einem erfassten Fehlerzustand des Schienenfahrzeugs. Die Auswahleinheit kann bevorzugt einen Integrated Circuit umfassen, besonders bevorzugt einen ASIC. Die Auswahleinheit kann aber auch vorzugsweise einen Mikrocontroller umfassen oder eine sonstige universelle Recheneinheit.

Um dem Fahrzeugführer den Istzustand des Schienenfahrzeugs mittels des durch die Auswahleinheit ausgewählten Bildes anzuzeigen, weist die Alarmierungsvorrichtung zumindest eine Benutzerschnittstelle mit zumindest einer Anzeigeeinheit auf. Die Benutzerschnittstelle kann dabei beispielsweise ein Monitor im Führerstand des Schienenfahrzeugs sein. Die Anzeigeeinheit kann dabei beispielsweise ein Display bzw. ein Führerstanddisplay des Monitors zur Visualisierung des von der Auswahleinheit ausgewählten Bilds sein und z. B. als Touchscreen ausgebildet sein.

Eine weitere Komponente der Alarmierungsvorrichtung stellt eine Anzeigesteuereinheit dar, um die Anzeigeeinheit so anzusteuern, dass zur Alarmierung des Fahrzeugführers das in Abhängigkeit vom erfassten Fehlerzustand ausgewählte Bild auf der Anzeigeeinheit ausgegeben wird. Die Anzeigesteuereinheit umfasst dabei vorzugsweise eine universelle Recheneinheit und eine Grafikschnittstelle, welche auch in der universellen Recheneinheit integriert sein kann.

Bei einem entsprechenden erfindungsgemäßen Verfahren zur Alarmierung eines Fahrzeugführers eines Schienenfahrzeugs, wird zunächst zumindest ein Fehlerzustand des Schienenfahrzeugs mittels einer Fehlerdetektionseinrichtung erfasst.

Nachdem der Fehlerzustand erfasst wurde, wird in Abhängigkeit dieses Fehlerzustands zumindest ein Bild, das in einem Bildspeicher beinhaltet ist, mittels einer Auswahleinheit ausgewählt.

Um das ausgewählte Bild dem Fahrzeugführer anzuzeigen, wird eine Anzeigeeinheit zumindest einer Benutzerschnittstelle der Alarmierungsvorrichtung mittels einer Anzeigesteuereinheit gesteuert. Hierdurch kann dann das in Abhängigkeit vom erfassten Fehlerzustand ausgewählte Bild auf der Anzeigeeinheit ausgegeben werden, um so den Fahrzeugführer zu alarmieren.

Unter erfindungsgemäßer Verwendung einer, insbesondere erfindungsgemäßen, Alarmierungsvorrichtung kann also ein Istzustand eines Schienenfahrzeugs angezeigt werden, um einen Fahrzeugführer zu alarmieren.

Die Alarmierungsvorrichtung bzw. Komponenten der Alarmierungsvorrichtung können während der Fertigung eines beliebigen Schienenfahrzeugs in diesem angeordnet bzw. eingebaut werden.

Die erfindungsgemäße Alarmierungsvorrichtung kann aber beispielsweise auch in einen Führerstand eines bereits bestehenden Schienenfahrzeugs eingebaut werden, um dieses so nachzurüsten.

Durch die Verwendung von einer beispielsweise kleinen Anzahl von leichtverständlichen Bildern zur Anzeige bzw. Darstellung eines Istzustands wird so eine schnelle und leichte Verständlichkeit des benötigten Handlungsbedarfs bei einem Fehlerzustand erreicht. Es bedarf dafür nur eines relativ geringen "Fahrzeug-Know-Hows" des Fahrzeugführers. Somit werden auch keine extra Schulungen benötigt, um dem Fahrzeugpersonal die Auswertung des Fehlerzustands zu erklären. Hierdurch können wiederum Schulungskosten für die Fahrzeugführer stark gesenkt werden.

Für den Schienenfahrzeugbetreiber können durch die erfindungsgemäße Alarmierungsvorrichtung zudem Kosten vermieden werden, die bisher aufgrund von Fehlverhalten eines Fahrzeugführers entstehen, wenn dieser die Fehlerzustände des Schienenfahrzeugs nicht deuten kann.

Ein weiterer Vorteil entsteht z. B. für die Hersteller eines Schienenfahrzeugs, da mittels einer Alarmierungsvorrichtung Falschmeldungen und eventuell nicht zutreffende Schadensersatzansprüche minimiert werden können.

Um Fehlerzustandssignale auch landseitig empfangen zu können (d. h. außerhalb des Schienenfahrzeugs beispielsweise in einer Servicezentrale), weist das eingangs genannte Alarmierungssystem zumindest ein zweites Funksystem auf, welches sich landseitig von einem Schienenfahrzeug befindet und mit einem ersten Funksystem einer erfindungsgemäßen Alarmierungsvorrichtung kommuniziert, wie später noch näher erläutert wird.

Mithilfe des Alarmierungssystems können dann z.B. auch in Service- und Diagnosetools die Bilder, die einen entsprechenden Fehlerzustand eines Schienenfahrzeugs darstellen, einem Werkstattpersonal angezeigt werden.

Um beispielsweise die Fehlerzustände des Schienenfahrzeugs statistisch auswerten zu können, z. B. in der Servicezentrale, umfasst das Alarmierungssystem bevorzugt eine Auswerteeinrichtung, die sich vorzugsweise landseitig zum Schienenfahrzeug befindet. Diese kommuniziert dabei vorzugsweise mit dem zweiten Funksystem zur Auswertung der ermittelten Fehlersignalzustände bzw. Fehlerzustände des Schienenfahrzeugs. Auch hier kann eine Anzeige der entsprechenden Bilder erfolgen, so dass beispielsweise die Auswertung durch Personal schneller erfolgen kann. Dies gilt insbesondere auch für Personal, welches kein tiefes Hintergrundwissen zu den technischen Abläufen des Schienenfahrzeugs aufweist. Durch eine Auswerteeinrichtung kann beispielsweise auch eine Effektivitätssteigerung bei der Verfolgung von Fehlerzuständen bzw. Fehlersignalen erwartet werden.

Ein Großteil der zuvor genannten Komponenten der Alarmierungsvorrichtung, können ganz oder teilweise in Form von Softwaremodulen in einem Prozessor einer entsprechenden Steuereinrichtung realisiert werden. Eine weitgehend softwaremäßige Realisierung hat den Vorteil, dass auch schon bisher verwendete Steuereinrichtungen auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer Steuereinrichtung einer Alarmierungsvorrichtung ladbar ist, mit Programmabschnitten, um alle Schritte des erfindungsgemäßen Verfahrens auszuführen, wenn das Programm in der Steuereinrichtung ausgeführt wird. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen

Zum Transport zur Steuereinrichtung und/oder zur Speicherung an oder in der Steuereinrichtung kann ein computerlesbares Medium, beispielsweise ein Memorystick, eine Festplatte oder ein sonstiger transportabler oder fest eingebauter Datenträger dienen, auf welchem die von einer Rechnereinheit der Steuereinrichtung einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Zur Erfassung zumindest eines Fehlersignals, zumindest einer Komponente des Schienenfahrzeugs, wie beispielsweise der Lok, einzelner Wagen, des Triebfahrzeugs oder dergleichen, umfasst die Fehlerdetektionsvorrichtung vorzugsweise zumindest eine Fehlerdetektionsschnittstelle.

Besonders bevorzugt weist die Fehlerdetektionsvorrichtung auch eine Auswerteeinheit auf, die zur Bestimmung eines Fehlerzustands des Schienenfahrzeugs auf Basis des erfassten Fehlersignals oder mehrerer erfasster Fehlersignale ausgebildet ist. Die Auswerteeinheit ist aber nur optional und wird nicht benötigt, wenn beispielsweise das Fehlersignal bereits einem Fehlerzustand entspricht. Handelt es sich z. B. bei dem Fehlersignal um einen Fehlercode, so wird mittels dieses Codes der Fehlerzustand schon direkt signalisiert. Eine Auswerteeinheit wäre also hier nicht von Nöten.

Damit die Bilder möglichst schnell und einfach einem Fahrzeugführer intuitiv einen entsprechenden Handlungsbedarf aufzeigen können, sind die Bilder bevorzugt als Bildsymbole, besonders bevorzugt als Piktogramme und/oder Icons ausgebildet. D. h., dass beispielsweise die Farbe, die Helligkeit der Kontrast etc. der Bilder auf die Wahrnehmung des Fahrzeugführers angepasst sind. Durch eine entsprechende Gestaltung der Bilder bzw. Piktogramme kann so sehr leicht und unabhängig von Sprache, kulturellem Hintergrund und technischem Knowhow ein Istzustand eines Schienenfahrzeugs vermittelt werden.

So weist beispielsweise ein klein geschriebener blauer Buchstabe "i" den Fahrzeugführer darauf hin, dass keine betrieblichen Einschränkungen vorliegen. D.h. der Istzustand des Schienenfahrzeugs entspricht in diesem Fall dem Normalzustand. Im Folgenden werden weitere Beispiele für Bilder bzw. Piktogramme aufgezeigt, die dem Fahrzeugführer eine Auskunft über den Istzustand des Schienenfahrzeugs geben und gegebenenfalls einen entsprechenden Handlungsbedarf aufzeigen:
- Ein kleingeschriebenes rotes x in einem Kreis und eine grüne menschliche Hand, welche ihren Daumen und ihren Zeigefinger ausstreckt und mit dem Zeigefinger auf das rote x deutet → Ein Bedienfehler liegt vor bzw. eine Bedienhandlung ist notwendig.
- Eine Lokomotive mit überlagertem gelben Warndreieck mit darin angeordnetem Ausrufezeichen → Eine betriebliche Einschränkung liegt vor, eine Weiterfahrt ist aber möglich.
- Eine Lokomotive mit überlagertem gelben Schraubenschlüssel → Eine betriebliche Einschränkung liegt vor, ein Werkstattaufenthalt ist zeitnah notwendig.
- Eine Lokomotive mit überlagertem rotem Stoppschild und/oder einem Ausrufezeichen → Keine Weiterfahrt möglich, das Schienenfahrzeug sollte umgehend zum sicheren Halt gebracht werden.

Die beispielsweise oben beschriebenen Bilder bzw. Piktogramme und deren Erläuterung sind vorzugsweise auch in einer Fahrzeugdokumentation z. B. in den Handbüchern des Schienenfahrzeugtyps dargestellt. Dadurch kann ein Fahrzeugführer bei Bedarf schnell und einfach eine Erläuterung eines Bilds nachschlagen bzw. nachlesen.

Die Bilder zu einzelnen Fehlerzuständen können aber grundsätzlich auch einzeln angezeigt werden. Vorzugsweise wird jedoch ein gesamter Istzustand eines Schienenfahrzeugs, auf einer zentralen Stelle der Anzeigeeinheit bzw. dem Führerstanddisplay angezeigt, welcher z. B. einer Zusammenfassung der Fehlerzustände des Schienenfahrzeugs entsprechen kann, wie bereits erwähnt wurde.

Um bei Bedarf beispielsweise noch zusätzliche Informationen zu dem Istzustand eines Schienenfahrzeugs zu erhalten, weist die Alarmierungsvorrichtung erfindungsgemäß einen Fehlertextspeicher auf, der eine Anzahl von Fehlerinformationstexten zu verschiedenen Fehlerzuständen des Schienenfahrzeugs umfasst. Diese Fehlerinformationstexte beschreiben in kurzer knapper, einfacher Sprache den Istzustand des Schienenfahrzeugs sowie den eventuellen anstehenden Handlungsbedarf.

Zudem umfasst die Alarmierungsvorrichtung erfindungsgemäß eine zweite Auswahleinheit zur Auswahl zumindest eines der Fehlerinformationstexte des Fehlertextspeichers in Abhängigkeit vom erfassten Fehlerzustand des Schienenfahrzeugs. Die zweite Auswahleinheit zur Auswahl der Fehlertexte kann aber auch gesondert von der ersten Auswahleinheit ausgebildet sein. Die zweite Auswahleinheit kann dabei der ersten Auswahleinheit entsprechen, die zur Auswahl eines der Bilder aus dem Bildspeicher in Abhängigkeit von einem erfassten Fehlerzustand des Schienenfahrzeugs dient, weswegen im Folgenden zusammenfassend für beide der Begriff "Auswerteeinheit" verwendet wird.

Die Fehlertexte könnten dabei beispielsweise den oben beschriebenen Erläuterungen zu den bereits beschriebenen Piktogrammen entsprechen. So könnte ein Fehlertext sein: "Ein Bedienfehler liegt vor bzw. eine Bedienhandlung ist notwendig", wenn beispielsweise der Fehlerzustand einer Traktionssperre vorliegt und das Piktogramm einer grünen menschlichen Hand angezeigt wird.

Die Anzeigesteuereinheit der Alarmierungsvorrichtung ist erfindungsgemäß so ausgebildet, dass zur Alarmierung eines Fahrzeugführers der in Abhängigkeit von einem Fehlerzustand ausgewählte Fehlerinformationstext auf der Anzeigeeinheit ausgegeben wird.

Um bei Bedarf einen Fehlerinformationstext auszugeben, weist die Benutzerschnittstelle erfindungsgemäß eine Eingabeeinheit zur Erfassung eines Textanzeigebefehls auf. Die Eingabeeinheit ist dabei in der Anzeigeeinheit der Alarmierungsvorrichtung integriert und kann beispielsweise als Touchscreen ausgebildet sein.

Erfindungsgemäß wird bei Erfassung eines Fehlerzustands nun zunächst das in Abhängigkeit zum Fehlerzustand ausgewählte Bild auf der Anzeigeeinheit ausgegeben. Erst bei einer Erfassung des Texteingabebefehls, welcher durch eine vorige Betätigung der Eingabeeinheit durch den Fahrzeugführer ausgelöst bzw. übermittelt wurde, wird der in Abhängigkeit vom Fehlerzustand ausgewählte Fehlerinformationstext auf der Anzeigeeinheit ausgegeben.

Vorzugsweise kann der Fehlerinformationstext neben dem Bild auf der Anzeigeeinheit ausgegeben werden.

Ist beispielsweise die Anzeigeeinheit relativ klein, so kann der Fehlerinformationstext aber auch bevorzugt anstelle des Bildes ausgegeben werden.

Zur besseren Übersicht können die Istzustände eines Schienenfahrzeugs mittels der entsprechenden Bilder und gegebenenfalls der Fehlerinformationstexte auch in einer tabellarischen Form auf einer Anzeigeeinheit angezeigt werden. Vorzugsweise umfasst ein Areal bzw. ein Anzeigebereich, in welchem das Bild auf der Anzeigeeinheit angezeigt wird, einen Sensorbereich. Dabei ist der Sensorbereich vorzugsweise als Teil der Eingabeeinheit zur Eingabe des Textanzeigebefehls ausgebildet. Dabei kann zum Beispiel der Fahrzeugführer durch Antippen des Sensorbereichs die Eingabeeinheit betätigen. Die Eingabeeinheit könnte aber beispielsweise auch kapazitiv ausgelöst werden, indem der Fahrzeugführer beispielsweise seine Hand nur in einem gewissen Abstand über den Sensorbereich hält.

Die Anzeigeeinheit der Alarmierungsvorrichtung kann z. B. auch mehrteilig ausgebildet sein und beispielsweise auf einer Seite die den Fehlerzuständen entsprechenden Bilder und auf einer anderen Seite die entsprechenden Fehlerinformationstexte anzeigen. Die Benutzerschnittstelle könnte aber auch eine zweite Anzeigeeinheit umfassen, wobei die Anzeigesteuereinheit der Alarmierungsvorrichtung ausgebildet ist, um die zweite Anzeigeeinheit so anzusteuern, dass zur Alarmierung eines Fahrzeugführers, der in Abhängigkeit vom Fehlerzustand ausgewählte Fehlerinformationstext auf der zweiten Anzeigeeinheit ausgegeben wird. Dadurch könnte beispielsweise gleichzeitig ein Bild auf der ersten Anzeigeeinheit und ein entsprechender Fehlerinformationstext auf der zweiten Anzeigeeinheit der Benutzerschnittstelle dargestellt werden. Häufig ist es vorteilhaft Personen, welche sich nicht in dem Schienenfahrzeug befinden, wie beispielsweise einem zentralen Zugleiter oder Werkstattpersonal, über den Istzustand des Schienenfahrzeugs zu informieren. Dazu weist die Alarmierungsvorrichtung vorzugsweise das bereits erwähnte erste Funksystem zur Umwandlung des Fehlerzustands in zumindest ein Fehlerzustandssignal und Übermittlung dieses Signals auf, welches vorzugsweise in einem Schienenfahrzeug integriert ist. Das Fehlerzustandssignal wird dabei bevorzugt durch den von der Fehlerdetektionseinrichtung erfassten und übermittelten Fehlerzustand ermittelt. Das Funksystem weist dazu bevorzugt eine Signalauswerteeinheit auf. Das Fehlerzustandssignal kann daraufhin beispielsweise an das zweite Funksystem des Alarmierungssystems übermittelt werden, welches sich landseitig vom Schienenfahrzeug befindet.

Die obengenannten Schritte zur Erfassung des Fehlerzustands bis zur Ausgabe der Bilder und gegeben falls der Fehlerinformationstexte auf einer Anzeigeeinheit erfolgt in einem nicht beanspruchten Beispiel softwareseitig. Dabei wird in einem nicht beanspruchten Beispiel eine Schichtenarchitektur für das Computerprogramm der Alarmierungsvorrichtung verwendet. Besonders bevorzugt wird eine Dreischichtenarchitektur verwendet. Dies bedeutet, dass die Architektur softwareseitig drei Schichten umfasst. Diese drei Schichten werden aber vorzugsweise durch eine Grafikschicht, eine Logikschicht und eine Datenschicht beschrieben.

Die Grafikschicht umfasst dabei vorzugsweise die Benutzerschnittstelle sowie die Anzeigeeinheit.

Die Logikschicht umfasst vorzugsweise die Auswahleinheit zur Auswahl zumindest eines der Bilder aus dem Bildspeicher sowie die Auswahleinheit zur Auswahl zumindest eines der Fehlerinformationstexte aus dem Fehlertextspeicher. Zudem umfasst die Logikschicht bevorzugt die Anzeigesteuereinheit, um die Anzeigeeinheit so anzusteuern. Dadurch wird zur Alarmierung eines Fahrzeugführers das in Abhängigkeit vom erfassten Fehlerzustand ausgewählte Bild und der in Abhängigkeit vom erfassten Fehlerzustand ausgewählte Fehlerinformationstext auf der Anzeigeeinheit ausgegeben.

Die Datenschicht umfasst vorzugsweise die Fehlerdetektionseinrichtung, den Symbolspeicher und gegebenenfalls den Fehlertextspeicher.

Die drei Schichten bauen dabei bevorzugt von unten nach oben aufeinander auf, wobei die unterste Schicht bevorzugt der Datenschicht, die mittlere Schicht der Logikschicht und die oberste Schicht der Präsentationsschicht entspricht. Durch diese Anordnung können nicht erwünschte Abhängigkeiten in einer Richtung vermieden werden.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
- Figur 1: grob schematisch ein Blockschaltbild einer erfindungsgemäßen Alarmierungsvorrichtung gemäß eines ersten Ausführungsbeispiels,
- Figur 2: grob schematisch ein Blockschaltbild einer erfindungsgemäßen Alarmierungsvorrichtung gemäß eines zweiten Ausführungsbeispiels,
- Figur 3: grob schematisch ein Blockschaltbild einer erfindungsgemäßen einer erfindungsgemäßen Alarmierungsvorrichtung gemäß eines dritten Ausführungsbeispiels,
- Figur 4: grob schematisch ein Blockschaltbild eines Ausführungsbeispiels eines erfindungsgemäßen Alarmierungssystems, welches eine Alarmierungsvorrichtung gemäß eines vierten Ausführungsbeispiels beinhaltet,
- Figur 5: schematisch einen Monitor einer erfindungsgemäßen Alarmierungsvorrichtung, auf welchem ein erstes Bild entsprechend eines Istzustands eines Schienenfahrzeugs angezeigt ist,
- Figur 6: schematisch den Monitor aus Figur 5, auf welchem ein zweites Bild entsprechend eines Istzustands des Schienenfahrzeugs angezeigt ist,
- Figur 7: schematisch den Monitor aus Figur 5, auf welchem ein drittes Bild entsprechend eines Istzustands des Schienenfahrzeugs angezeigt ist,
- Figur 8: schematisch den Monitor aus Figur 5, auf welchem ein viertes Bild entsprechend eines Istzustands des Schienenfahrzeugs angezeigt ist
- Figur 9: schematisch den Monitor aus Figur 5, auf welchem ein fünftes Bild entsprechend eines Istzustands des Schienenfahrzeugs angezeigt ist und
- Figur 10: schematisch den Monitor aus Figur 5, auf welchem entsprechend zu Fehlerzuständen des Schienenfahrzeugs, das zweite Bild aus Figur 6 und das dritte Bild aus Figur 7 sowie Fehlerinformationstexte angezeigt sind.

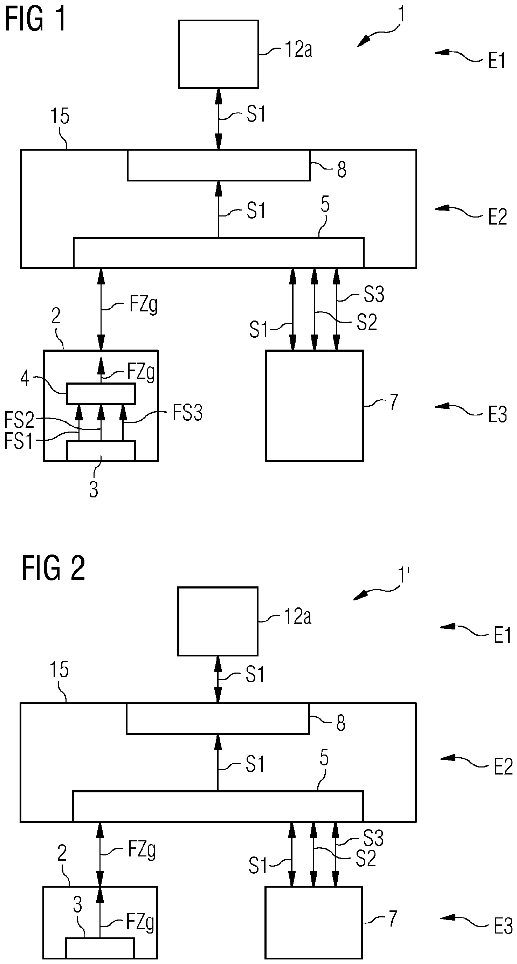

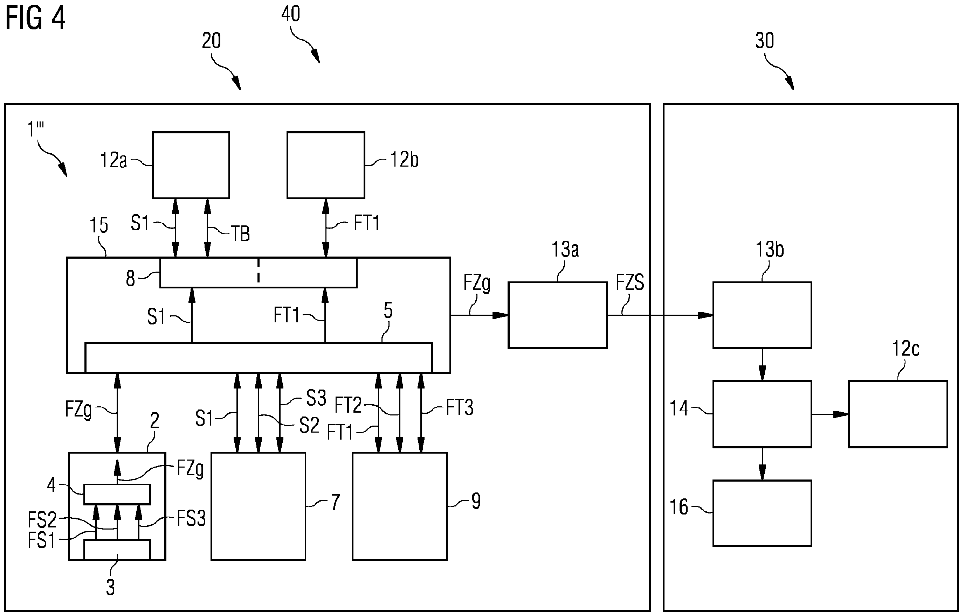

In FIG 1 ist schematisch in einem Blockschaltbild die Systemarchitektur eines Ausführungsbeispiels einer Alarmierungsvorrichtung 1 gezeigt. Die Systemarchitektur ist hier grob in drei Ebenen aufgeteilt. In der untersten Ebene E3 befindet sich eine Fehlerdetektionseinrichtung 2, die hier einen Fehlerzustand FZg eines Schienenfahrzeugs 20 (siehe FIG 4) erfasst. Die Fehlerdetektionseinrichtung 2 umfasst hier eine Fehlerdetektionsschnittstelle 3, um Fehlersignale FS1, FS2, FS3 von Komponenten eines Schienenfahrzeugs 20 zu erfassen. Die erfassten Fehlersignale FS1, FS2, FS3 werden an eine Auswerteeinheit 4 der Fehlerdetektionseinrichtung 2 übermittelt. Aus den übermittelten Fehlersignalen FS1, FS2, FS3 ermittelt die Auswerteeinheit 4 hier einen Fehlerzustand FZg bzw. einen Gesamtfehlerzustand FZg des Schienenfahrzeugs 20. Der hier ermittelte Gesamtfehlerzustand FZg wird an die zweite Ebene E2, hier eine Steuereinrichtung 15, übermittelt.

In der untersten Ebene E3 der Systemarchitektur der Anzeigevorrichtung 1 befindet sich hier zudem ein Bildspeicher 7, der eine Anzahl von Bildern S1, S2, S3, die einen entsprechenden Fehlerzustand beschreiben, beinhaltet. Diese Bilder S1, S2, S3 werden ebenfalls an die Steuereinrichtung 15 übermittelt.

Mittels einer Auswahleinheit 5 der Steuereinrichtung 15 wird daraufhin auf Basis des von der Fehlerdetektionseinrichtung 2 übermittelten Fehlerzustands FZg ein entsprechendes Bild S1 an eine Anzeigesteuereinheit 8 der Steuereinrichtung 15 übermittelt. Die Anzeigesteuereinheit 8 kann dann eine Anzeigeeinheit 12a, welche sich in einer ersten Ebene E1 der Systemarchitektur der Alarmierungsvorrichtung 1 befindet, so ansteuern, dass das an die Anzeigesteuereinheit 8 übermittelte Bild S1 auf der Anzeigeeinheit 12a dargestellt wird. Die Anzeigeeinheit 12a kann dabei, wie später noch näher erläutert, beispielsweise ein Führerstanddisplay bzw. ein Teilbereich eines Führerstanddisplays in einem Schienenfahrzeug 20 sein. Auf diesem kann dann einem Fahrzeugführer ein Istzustand des Schienenfahrzeugs 20 mittels des übermittelten Bildes S1 aus dem Bildspeicher 7 anzeigt werden.

In FIG 2 ist ein Blockschaltbild der Systemarchitektur eines zweiten Ausführungsbeispiels einer Alarmierungsvorrichtung 1' gezeigt. Hier weist die Fehlerdetektionseinrichtung 2 jedoch keine Auswerteeinheit 4 auf, sondern nur eine Fehlerdetektionsschnittstelle 3. Eine Auswerteeinheit 4 ist hier nicht nötig, da das Fehlersignal direkt schon einen Fehlerzustand angibt und nicht erst analysiert bzw. umgewandelt werden muss. In FIG 2 ist z. B. das Fehlersignal ein Fehlercode und signalisiert so den Fehlerzustand FZg direkt. Der weitere Aufbau der erfindungsgemäßen Alarmierungsvorrichtung 1' entspricht dem aus FIG 1.

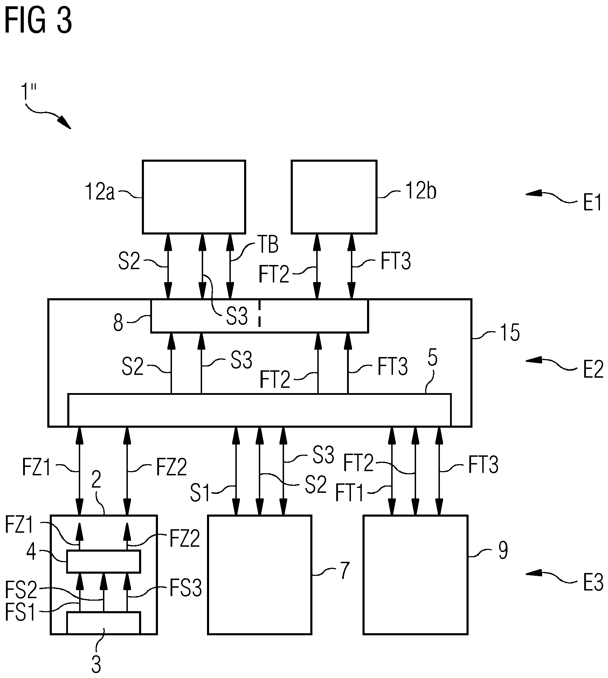

Mit der erfindungsgemäßen Alarmierungsvorrichtung kann aber nicht nur ein Fehlerzustand FZg bzw. ein Gesamtfehlerzustand FZg eines Schienenfahrzeugs 20 ausgegeben und angezeigt werden, wie dies in den FIG 1 und 2 beschrieben ist. Es können auch mehrere Fehlerzustände FZ1, FZ2 erfasst und dargestellt werden. Diese Fehlerzustände FZ1, FZ2 können beispielsweise Fehlerzustände einzelner Komponenten des Schienenfahrzeugs 20 beschreiben. FIG 3 zeigt dies in einem dritten Ausführungsbeispiel einer erfindungsgemäßen Alarmierungsvorrichtung 1" schematisch. Mittels der Auswerteeinheit 4 der Fehlerdetektionseinrichtung 2, werden hier ein Fehlerzustand FZ1 einer ersten Komponente und ein zweiter Fehlerzustand FZ2 einer zweiten Komponente des Schienenfahrzeugs 20 erfasst und an eine Auswahleinheit 5 übermittelt. Die Auswahleinheit 5 wählt daraufhin passend zum ersten Fehlerzustand FZ1 ein Bild S2 und passend zum zweiten Fehlerzustand FZ2 ein Bild S3 aus dem Bildspeicher 7 aus, welches auf der Anzeigeeinheit 12a angezeigt wird.

Sollen zusätzlich zu den Bildern S1, S2, S3 dem Fahrzeugführer noch weitere Informationen zum Istzustand des Schienenfahrzeugs 20 angezeigt werden, so kann beispielsweise die Alarmierungsvorrichtung 1", wie in FIG 3 gezeigt, einen Fehlertextspeicher 9 umfassen. Dieser Fehlertextspeicher 9 befindet sich in der unteren Ebene E3 mit der Fehlerdetektionseinrichtung 2 und dem Bildspeicher 7. Der Fehlertextspeicher 9 umfasst dabei verschiedene Fehlerinformationstexte FT1, FT2, FT3. Die Fehlerinformationstexte FT1, FT2, FT3 können ebenfalls jeweils einem Fehlerzustand FZ1, FZ2 zugeordnet werden. In der Auswahleinheit 5 wird dann entsprechend der eingegangenen Fehlerzustände FZ1, FZ2 ein erster Fehlerinformationstext FT2 und ein zweiter Fehlerinformationstext FT3 an die Anzeigesteuereinheit 8 übermittelt. Auch hier könnte beispielsweise nur ein Fehlerinformationstext FT1 übermittelt werden, wenn ein Gesamtfehlerzustand FZg beschrieben werden soll.

Zur Anzeige der Fehlerinformationstexte FT2, FT3 weist die Anzeigevorrichtung 1" hier eine zweite Anzeigeeinheit 12b auf. Die zweite Anzeigeeinheit 12b wird von der Anzeigesteuereinheit 8 so angesteuert, dass die entsprechenden Fehlerinformationstexte FT2, FT3 auf der Anzeigeeinheit 12b dargestellt werden können. Sie könnten aber auch auf der Anzeigeeinheit 12a mitdargestellt werden.

Die Anzeigesteuereinheit 8 kann dabei der Anzeigesteuereinheit 8 entsprechen, welche die Anzeigeeinheit 12a so ansteuert, dass die in Abhängigkeit vom erfassten Fehlerzustand FZ1, FZ2 ausgewählten Bilder S2, S3 auf der Anzeigeeinheit 12a dargestellt werden. Die Anzeigesteuereinheit 8 kann auch von der ersten Anzeigesteuereinheit 8 getrennt ausgebildet sein.

Die entsprechenden Fehlerinformationstexte FT2, FT3 werden hier erst nach Eingabe bzw. Erhalt eines Textanzeigebefehls TB durch einen Fahrzeugführer auf der zweiten Anzeigeeinheit 12b angezeigt. Beispielsweise durch Betätigen einer Eingabeeinheit 10, welche später noch näher erläutert wird.

Um die Istzustände eines Schienenfahrzeugs 20 auch außerhalb eines Schienenfahrzeugs 20 anzuzeigen, beispielsweise in einem Servicecenter, umfasst das in FIG 4 gezeigte Ausführungsbeispiel eines erfindungsgemäßen Alarmierungssystems 40 Komponenten, die sich in dem Schienenfahrzeug 20 befinden, und Komponenten, die sich auf einer Landseite 30 befinden. Die Komponenten des Alarmierungssystems 40, die im Schienenfahrzeug angeordnet sind, werden hier von einem vierten Ausführungsbeispiel einer Alarmierungsvorrichtung 1‴ umfasst. Um nun den Fehlerzustand FZg auf einer Landseite 30 anzuzeigen, umfasst die Alarmierungsvorrichtung 1‴ ein erstes Funksystem 13a, welches einen von der Steuereinrichtung 15 übermittelten Fehlerzustand FZg erfasst. Das erste Funksystem 13a übergibt dann, auf Grund des empfangenen Fehlerzustands FZg, ein daraus gebildetes Fehlerzustandssignal FZS an ein zweites Funksystem 13b, welches sich landseitig, beispielsweise in dem Servicecenter, befindet. Das zweite Funksystem 13b übergibt hier das Fehlerzustandssignal FZS an eine Auswerteeinrichtung 14. In der Auswerteeinrichtung 14 können dann z. B. die Fehlerzustände des Schienenfahrzeugs statistisch ausgewertet werden. Die Auswerteeinheit 14 ist wiederum elektronisch mit einer Anzeigeeinheit 12c verbunden, in der ein zu dem Fehlerzustand FZg entsprechendes Bild S1 und bei Bedarf auch ein entsprechender Fehlerinformationstext FT1 angezeigt werden kann. In einem mit der Auswerteeinrichtung 14 elektronisch verbundenen Fehlerspeicher 16 können dann die bisher ermittelten Fehlerzustände FZg und beispielsweise zusätzlichen zu den Fehlerzuständen FZg erhobene Informationen wie Fahrzeugtyp, Datum und Uhrzeit des Auftretens des Fehlerzustands usw. hinterlegt werden. Der restliche Aufbau der erfindungsgemäßen Alarmierungsvorrichtung 1‴ entspricht der aus FIG 3.

Werden anstelle eines Gesamtfehlerzustand FZg, wie in FIG 4 gezeigt, mehrere Fehlerzustände FZ1, FZ2 übermittelt, so kann natürlich auch das Funksystem 13a eine entsprechende Anzahl an Fehlerzustandssignalen FZS aussenden.

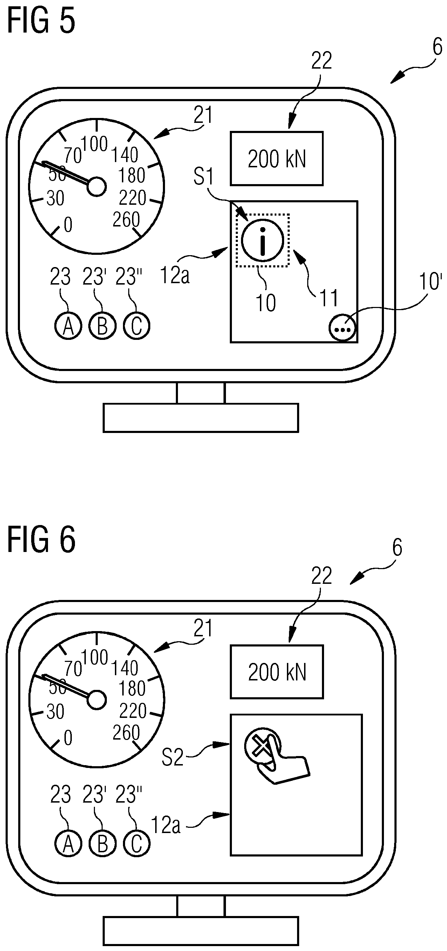

FIG 5 zeigt beispielhaft eine Benutzerschnittstelle 6, hier einen Monitor 6, eines Ausführungsbeispiels einer erfindungsgemäßen Alarmierungsvorrichtung. Der Monitor 6 befindet sich z. B. in einem Führerstand eines Schienenfahrzeugs 20. Auf dem Monitor 6 bzw. auf dem Führerstanddisplay ist zum einen ein Tacho 21 angezeigt, auf welchem eine momentane Geschwindigkeit in Km/h des Schienenfahrzeugs 20 abgelesen werden kann. Zum anderen ist eine Anzeige 22 dargestellt, die die zur Geschwindigkeit korrespondierende Zugkraft in N/m anzeigt. Zudem sind auf dem Monitor 6 noch verschiedene Menüpunkte 23, 23', 23" zu sehen, unter denen z. B. der Fahrzeugführer zum Fahrtverlauf noch weitere Eingaben tätigen oder weitere Informationen abrufen kann.

In der Anzeigeeinheit 12a in FIG 5 ist entsprechend eines von der erfindungsgemäßen Alarmierungsvorrichtung 1, 1', 1", 1‴ erfassten Gesamtfehlerzustandes FZg des Schienenfahrzeugs 20 ein Bild S1, hier ein Symbol S1 bzw. ein Piktogramm S1 dargestellt. Das Piktogramm S1 ist hier ein kleines i, vorzugsweise in Blau, wodurch dem Fahrzeugführer übermittelt wird, dass keine betriebliche Einschränkung vorliegt.

Die FIG 6 bis 10 zeigen den gleichen Monitor 6 bzw. das gleiche Führerstanddisplay aus FIG 5, jedoch mit unterschiedlichen Piktogrammen, die auf der Anzeigeeinheit 12a dargestellt werden.

Das Piktogramm S2 auf der Anzeigeeinheit 12a in FIG 6, zeigt ein kleingeschriebenes x in einem Kreis, vorzugsweise in der Farbe Rot und eine darüber liegende Hand, vorzugsweise in Grün dargestellt, welche ihren Daumen und ihren Zeigefinger ausstreckt. Dieses Piktogramm S2 weist den Fahrzeugführer darauf hin, dass ein Bedienfehler vorliegt bzw. eine Bedienhandlung notwendig ist.

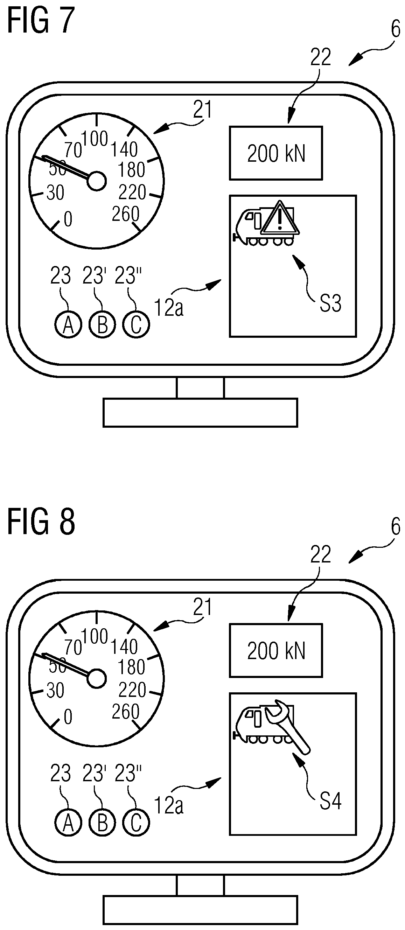

In FIG 7 ist in der Anzeigeeinheit 12a ein Piktogramm S3 gezeigt, dass eine Lokomotive, vorzugsweise in der Farbe Schwarz, mit einem überlagerten Warndreieck, vorzugsweise in Gelb dargestellt, beinhaltet. Im Warndreieck ist ein Ausrufezeichen, vorzugsweise in Schwarz dargestellt, angeordnet. Erscheint dieses Piktogramm S3 auf dem Führerstanddisplay, so deutet dies darauf hin, dass eine betriebliche Einschränkung des Schienenfahrzeugs vorliegt, eine Weiterfahrt jedoch möglich ist.

In FIG 8 ist wiederum ein Piktogramm mit einer Lokomotive, vorzugsweise in Schwarz, mit einem überlagerten Schraubenschlüssel, vorzugsweise in Gelb, gezeigt. Dieses Piktogramm S4 weist den Fahrzeugführer daraufhin, dass eine betriebliche Einschränkung vorliegt und ein Werkstattaufenthalt zeitnah notwendig ist.

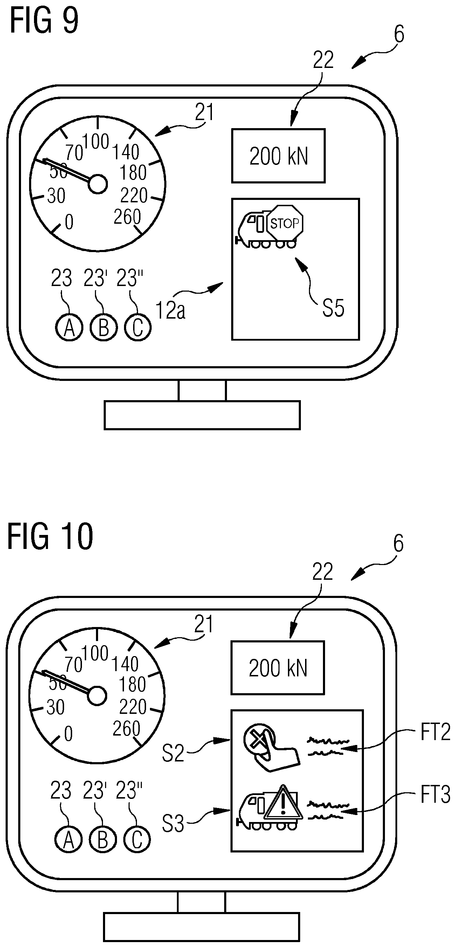

Das Piktogramm S5 in FIG 9 zeigt eine Lokomotive, vorzugsweise in Schwarz dargestellt, mit einem überlagerten Stoppschild, vorzugsweise in Rot. Dies bedeutet, dass keine Weiterfahrt des Schienenfahrzeugs 20 möglich ist und dass das Schienenfahrzeug 20 umgehend zum sicheren Halt gebracht werden sollte.

In FIG 5 bis 9 wurde jeweils ein Gesamtfehlerzustand FZg des Schienenfahrzeugs 20 im Führerstanddisplay 6 angezeigt. Wie bereits erläutert, können auch mehrere Fehlerzustände FZ1, FZ2 mittels verschiedener Bilder bzw. Piktogramme angezeigt werden. FIG 10 zeigt dazu auf einem Monitor 6 im Anzeigebereich 12a ein erstes Piktogramm S2 und ein zweites Piktogramm S3. Im selben Anzeigebereich 12a werden neben den Piktogrammen S2, S3 entsprechende Fehlerinformationstexte FT2, FT3 angezeigt.

Die Fehlerinformationstexte FT2, FT3 können, wie in FIG 10 gezeigt, neben den Piktogrammen S2, S3 angezeigt werden. Sie können aber auch anstelle der Piktogramme angezeigt werden. Dazu weist die Anzeigevorrichtung 12a eine Eingabeeinheit 10, 10' auf. Die Eingabeeinheit 10 kann in einer bevorzugten Variante der erfindungsgemäßen Alarmierungsvorrichtung, wie in FIG 5 gezeigt, einem Sensorbereich 11 entsprechen. Der Sensorbereich 11 umfasst dabei ein Areal auf dem das erste Symbol S1 auf der Anzeigeeinheit 12a angezeigt wird. Tippt nun beispielsweise ein Fahrzeugführer auf das Symbol S1, so wird die Eingabeeinheit 10 betätigt und ein Textanzeigebefehl TB wird ausgesandt und anstelle der Symbole oder auch neben den Symbolen wird ein Fehlerinformationstext angezeigt(in FIG 1 nicht dargestellt). Die Eingabeeinheit 10' muss aber nicht einem Sensorbereich 11 entsprechen, sondern kann beispielsweise auch einer Art Button entsprechen, welcher z. B. ebenfalls auf dem Führerstanddisplay angeordnet ist.

## Patentansprüche

1. Alarmierungsvorrichtung (1; 1'; 1"; 1‴) für ein Schienenfahrzeug (20), umfassend zumindest die folgenden Komponenten:
- eine Fehlerdetektionseinrichtung (2), die ausgebildet ist um zumindest einen Fehlerzustand (FZ1; FZ2; FZg) des Schienenfahrzeugs (20) zu erfassen,
- einen Bildspeicher (7), der eine Anzahl von Bildern (S1; S2; S3; S4; S5) beinhaltet, die einen Istzustand eines Schienenfahrzeugs (20) angeben, wobei die Bilder (S1; S2; S3; S4; S5) als Bildsymbole (S1; S2; S3; S4; S5) ausgebildet sind,
- eine erste Auswahleinheit (5) zur Auswahl zumindest eines der Bilder (S1; S2; S3; S4; S5) aus dem Bildspeicher (7) in Abhängigkeit von einem erfassten Fehlerzustand (FZ1; FZ2; FZg) des Schienenfahrzeugs (20),
- zumindest eine Benutzerschnittstelle (6) mit zumindest einer Anzeigeeinheit (12a),
- wobei die Benutzerschnittstelle (6) eine Eingabeeinheit (10; 10') zur Erfassung eines Textanzeigebefehls (TB) aufweist und die Eingabeeinheit in der Anzeigeeinheit (12a) integriert ist,
- eine Anzeigesteuereinheit (8), um die Anzeigeeinheit (12a) so anzusteuern, dass zur Alarmierung eines Fahrzeugführers das in Abhängigkeit vom erfassten Fehlerzustand (FZ1; FZ2; FZg) ausgewählte Bild (S1; S2; S3; S4; S5) auf der Anzeigeeinheit (12a) ausgegeben wird,
- einen Fehlertextspeicher (9), der eine Anzahl von Fehlerinformationstexten (FT1; FT2; FT3) zu verschiedenen Fehlerzuständen (FZ1; FZ2; FZg) des Schienenfahrzeugs (20) beinhaltet,
- eine zweite Auswahleinheit (5) zur Auswahl zumindest eines der Fehlerinformationstexte (FT1; FT2; FT3) des Fehlertextspeichers (9) in Abhängigkeit vom Fehlerzustand (FZ) des Schienenfahrzeugs (20),
- wobei die Anzeigesteuereinheit (8) so ausgebildet ist, dass zur Alarmierung eines Fahrzeugführers der in Abhängigkeit vom erfassten Fehlerzustand (FZ1; FZ2; FZg) ausgewählte Fehlerinformationstext (FT1; FT2; FT3) auf der Anzeigeeinheit (12a) ausgegeben wird,
- so dass bei Erfassung eines Fehlerzustands (FZ1; FZ2; FZg) des Schienenfahrzeugs (20) zunächst das in Abhängigkeit vom Fehlerzustand (FZ1; FZ2; FZg) ausgewählte Bild (S1; S2; S3; S4; S5) auf der Anzeigeeinheit (12a) ausgegeben wird und erst bei Erfassung eines Textanzeigebefehls (TB) der in Abhängigkeit vom Fehlerzustand (FZ1; FZ2; FZg) ausgewählte Fehlerinformationstext (FT1; FT2; FT3) auf der Anzeigeeinheit (12a) ausgegeben wird.

2. Alarmierungsvorrichtung nach Anspruch 1, wobei die Fehlerdetektionseinrichtung (2) zumindest eine Fehlerdetektionsschnittstelle (3) zur Erfassung zumindest eines Fehlersignals (FS1; FS2; FS3) zumindest einer Komponente des Schienenfahrzeugs (20) aufweist und vorzugsweise eine Auswerteeinheit (4) aufweist, die zur Bestimmung eines Fehlerzustands (FZ1; FZ2; FZg) des Schienenfahrzeugs (20) auf Basis des erfassten Fehlersignals (FS1) oder mehrerer erfasster Fehlersignale (FS1; FS2; FS3) ausgebildet ist.

3. Alarmierungsvorrichtung nach einem der vorstehenden Ansprüche, wobei die Bildsymbole (S1; S2; S3; S4; S5) als Piktogramme (S1; S2; S3; S4; S5) und/oder Icons (S1; S2; S3; S4; S5) ausgebildet sind.

4. Alarmierungsvorrichtung nach Anspruch 1, wobei der ausgewählte Fehlerinformationstext (FT1; FT2; FT3) neben dem Bild (S1; S2; S3; S4; S5) auf die Anzeigeeinheit (12a) ausgegeben wird.

5. Alarmierungsvorrichtung nach Anspruch 1 oder 4, wobei der ausgewählte Fehlerinformationstext (FT1; FT2; FT3) anstelle des Bildes (S1; S2; S3; S4; S5) auf die Anzeigeeinheit (12a) ausgegeben wird.

6. Alarmierungsvorrichtung nach einem der Ansprüche 1 oder 4 bis 5, wobei ein Areal, in welchem das Bild (S1; S2; S3; S4; S5) auf der Anzeigeeinheit (12a) angezeigt wird, einen Sensorbereich (11) umfasst, wobei der Sensorbereich (11) als Teil der Eingabeeinheit (10; 10') zur Eingabe des Textanzeigebefehls (TB) ausgebildet ist.

7. Alarmierungsvorrichtung nach einem der vorstehenden Ansprüche, umfassend zumindest ein erstes Funksystem (13a) zur Übermittlung zumindest eines Fehlerzustandssignals (FZS).

8. Schienenfahrzeug (20), aufweisend eine Alarmierungsvorrichtung (1; 1'; 1"; 1‴) nach einem der vorstehenden Ansprüche.

9. Alarmierungssystem (40) mit einer Alarmierungsvorrichtung (1; 1'; 1"; 1‴) nach Anspruch 7, umfassend ein zweites Funksystem (13b), welches sich landseitig von einem Schienenfahrzeug (20) befindet und mit dem ersten Funksystem (13a), zum landseitigen Empfang des Fehlerzustandssignals (FZS) kommuniziert.

## Claims

1. Warning device (1; 1'; 1"; 1‴) for a rail vehicle (20), comprising at least the following components:
- an error detection apparatus (2), which is designed to detect at least one error condition (FZ1; FZ2; FZg) of the rail vehicle (20),
- an image memory (7), which contains a number of images (S1; S2; S3; S4; S5) indicating the actual condition of a rail vehicle (20), wherein the images (S1; S2; S3; S4; S5) are designed as image symbols (S1; S2; S3; S4; S5),
- a first selection unit (5) for selecting at least one of the images (S1; S2; S3; S4; S5) from the image memory (7) depending on a detected error condition (FZ1; FZ2; FZg) of the rail vehicle (20),
- at least one user interface (6) with at least one display unit (12a),
- wherein the user interface (6) comprises an input unit (10; 10') for detecting a text display command (TB) and the input unit is integrated within the display unit (12a),
- a display control unit (8) for controlling the display unit (12a) in such a way that, in order to warn a vehicle driver, the image (S1; S2; S3; S4; S5) selected depending on the detected error condition (FZ1; FZ2; FZg) is output on the display unit (12a),
- an error text memory (9), which contains a number of error information texts (FT1; FT2; FT3) for different error conditions (FZ1; FZ2; FZg) of the rail vehicle (20),
- a second selection unit (5) for selecting at least one of the error information texts (FT1; FT2; FT3) of the error text memory (9) depending on the error condition (FZ) of the rail vehicle (20),
- wherein the display control unit (8) is designed in such a way that, in order to warn a vehicle driver, the error information text (FT1; FT2, FT3) selected depending on the detected error condition (FZ1; FZ2; FZg) is output on the display unit (12a)
- in such a way that when detecting an error condition (FZ1; FZ2; FZg) of the rail vehicle (20), initially, the image (S1; S2; S3; S4; S5) selected depending on the error condition (FZ1; FZ2; FZg) is output on the display unit (12a) and only when a text display command (TB) is detected is the error information text (FT1; FT2; FT3) selected depending on the error condition (FZ1; FZ2; FZg) output on the display unit (12a).

2. Warning device according to Claim 1, wherein the error detection apparatus (2) comprises at least one error detection interface (3) for detecting at least one error signal (FS1; FS2; FS3) of at least one component of the rail vehicle (20) and preferably comprises an evaluation unit (4) that is designed to determine an error condition (FZ1; FZ2; FZg) of the rail vehicle (20) based on the detected error signal (FS1) or a plurality of detected error signals (FS1; FS2; FS3).

3. Warning device according to either of the preceding claims, wherein the image symbols (S1; S2; S3; S4; S5) are designed as pictograms (S1; S2; S3; S4; S5) and/or icons (S1; S2; S3; S4; S5) .

4. Warning device according to Claim 1, wherein the selected error information text (FT1; FT2; FT3) is output onto the display unit (12a) next to the image (S1; S2; S3; S4; S5).

5. Warning device according to Claim 1 or 4, wherein the selected error information text (FT1; FT2; FT3) is output onto the display unit (12a) instead of the image (S1; S2; S3; S4; S5).

6. Warning device according to any one of Claims 1 or 4 to 5, wherein an area in which the image (S1; S2; S3; S4; S5) is displayed on the display unit (12a) comprises a sensor region (11), wherein the sensor region (11) is designed as part of the input unit (10; 10') for entering the text display command (TB).

7. Warning device according to one of the preceding claims, comprising at least one first radio system (13a) for transmitting at least one error condition signal (FZS).

8. Rail vehicle (20), comprising a warning device (1; 1'; 1"; 1‴) according to one of the preceding claims.

9. Warning system (40) with a warning device (1; 1'; 1"; 1‴) according to Claim 7, comprising a second radio system (13b), which is located on the land-side of a rail vehicle (20) and communicates with the first radio system (13a) for the landside reception of the error condition signal (FZS).

## Revendications

1. Dispositif d'alarme (1 ; 1' ; 1" ; 1‴) pour véhicule ferroviaire (20), comprenant au moins les composants suivants :
- un dispositif de détection de défaillances (2) qui est conçu pour détecter au moins un état défectueux (FZ1 ; FZ2 ; FZg) du véhicule ferroviaire (20),
- une mémoire d'images (7), qui contient un certain nombre d'images (S1 ; S2 ; S3 ; S4 ; S5) qui indiquent un état réel d'un véhicule ferroviaire (20), les images (S1 ; S2 ; S3 ; S4 ; S5) étant conçues comme des symboles graphiques (S1 ; S2 ; S3 ; S4 ; S5),
- une première unité de sélection (5) permettant de sélectionner au moins une des images (S1 ; S2 ; S3 ; S4 ; S5) dans la mémoire d'images (7) en fonction d'un état défectueux détecté (FZ1 ; FZ2 ; FZg) du véhicule ferroviaire (20),
- au moins une interface utilisateur (6) dotée d'au moins une unité d'affichage (12a),
- l'interface utilisateur (6) comportant une unité d'entrée (10 ; 10') pour entrer une commande d'affichage de texte (TB) et l'unité d'entrée étant intégrée dans l'unité d'affichage (12a),
- une unité de commande d'affichage (8) pour commander l'unité d'affichage (12a) de sorte que l'image (S1 ; S2 ; S3 ; S4 ; S5) sélectionnée en fonction de l'état défectueux détecté (FZ1 ; FZ2 ; FZg) est émise sur l'unité d'affichage (12a) pour alerter le conducteur du véhicule,
- une mémoire de textes de défaillance (9) qui contient un certain nombre de textes d'information de défaillance (FT1 ; FT2 ; FT3) pour différents états défectueux (FZ1 ; FZ2 ; FZg) du véhicule ferroviaire (20),
- une seconde unité de sélection (5) permettant de sélectionner au moins l'un des textes d'information de défaillance (FT1 ; FT2 ; FT3) de la mémoire de textes de défaillance (9) en fonction de l'état défectueux (FZ) du véhicule ferroviaire (20),
- l'unité de commande d'affichage (8) étant conçue de sorte que le texte d'information d'erreur (FT1 ; FT2 ; FT3) sélectionné en fonction de l'état défectueux détecté (FZ1 ; FZ2 ; FZg) est émis sur l'unité d'affichage (12a) pour alerter le conducteur du véhicule,
- de sorte que lorsqu'un état défectueux (FZ1 ; FZ2 ; FZg) du véhicule ferroviaire (20) est détecté, l'image (S1 ; S2 ; S3 ; S4 ; S5) sélectionnée en fonction de l'état défectueux (FZ1 ; FZ2 ; FZg) est d'abord émise sur l'unité d'affichage (12a) et le texte d'information de défaillance (FT1 ; FT2 ; FT3) sélectionné en fonction de l'état défectueux (FZ1 ; FZ2 ; FZg) n'est émis sur l'unité d'affichage (12a) que lorsqu'une commande d'affichage de texte (TB) est détectée.

2. Dispositif d'alarme selon la revendication 1, dans lequel le dispositif de détection de défaillances (2) comporte au moins une interface de détection de défaillances (3) permettant de détecter au moins un signal de défaillance (FS1 ; FS2 ; FS3) d'au moins un composant du véhicule ferroviaire (20) et comporte de préférence une unité d'évaluation (4) qui est conçue pour déterminer un état défectueux (FZ1 ; FZ2 ; FZg) du véhicule ferroviaire (20) sur la base du signal de défaillance détecté (FS1) ou d'une pluralité de signaux de défaillance détectés (FS1 ; FS2 ; FS3).

3. Dispositif d'alarme selon l'une des revendications précédentes, dans lequel les symboles graphiques (S1 ; S2 ; S3 ; S4 ; S5) sont conçus sous forme de pictogrammes (S1 ; S2 ; S3 ; S4 ; S5) et/ou d'icônes (S1 ; S2 ; S3 ; S4 ; S5).

4. Dispositif d'alarme selon la revendication 1, dans lequel le texte d'information de défaillance sélectionné (FT1 ; FT2 ; FT3) est émis sur l'unité d'affichage (12a) à côté de l'image (S1 ; S2 ; S3 ; S4 ; S5).

5. Dispositif d'alarme selon la revendication 1 ou 4, dans lequel le texte d'information de défaillance sélectionné (FT1 ; FT2 ; FT3) est émis sur l'unité d'affichage (12a) à la place de l'image (S1 ; S2 ; S3 ; S4 ; S5).

6. Dispositif d'alarme selon l'une des revendications 1 ou 4 à 5, dans lequel une zone dans laquelle l'image (S1 ; S2 ; S3 ; S4 ; S5) est affichée sur l'unité d'affichage (12a), comprend une zone de capteur (11), la zone de capteur (11) étant conçue comme une partie de l'unité d'entrée (10 ; 10') pour entrer la commande d'affichage de texte (TB).

7. Dispositif d'alarme selon l'une des revendications précédentes, comprenant au moins un premier système radio (13a) permettant de transmettre au moins un signal d'état défectueux (FZS) .

8. Véhicule ferroviaire (20) comportant un dispositif d'alarme (1 ; 1' ; 1" ; 1‴) selon l'une des revendications précédentes.

9. Système d'alarme (40) doté d'un dispositif d'alarme (1 ; 1' ; 1" ; 1‴) selon la revendication 7, comprenant un second système radio (13b) qui est situé du côté terre d'un véhicule ferroviaire (20) et communique avec le premier système radio (13a), pour la réception du côté terre du signal d'état défectueux (FZS).
